# EUROPEAN PATENT APPLICATION

(11) **EP 1 795 889 A1**
(43) Date of publication of application: **13.06.2007**
(21) Application number: 06025251.7
(22) Date of filing: 06.12.2006
(51) Int. Cl.: G01N 27/72

(54) **Method and apparatus for determining density of metal-inclusive components by inductance technics**

(30) Priority: 07.12.2005 US 296113
(71) Applicant: Eaton Corporation, Cleveland Ohio 44114-2584 (US)
(72) Inventor: Bower, Stephen P., Troy MI 48083 (US); Arnold, William J., Davison MI 48423 (US)
(74) Representative: Geyer, Ulrich F.

(57) **Abstract**

A density evaluator (10) for a metal-inclusive component (C) includes a simulator (14) and a meter (16). The simulator (14) includes a receiving portion (28) for receiving at least a portion of a metal-inclusive component (C). The meter (16) is operatively connected with the simulator (14). The meter (16) obtains an inductance value (Lₘ) associated with the metal-inclusive component (C) and the inductance value (Lₘ) is used to determine a density value (Dₘ). A method and system for evaluating a density of a metal-inclusive component (C) is also disclosed.

## Description

### TECHNICAL FIELD

The present disclosure relates generally to a method and apparatus for determining density associated with a metal-inclusive component.

### BACKGROUND

Metal-inclusive components (e.g., powder metal components with magnetic properties) may include a metallic material composition for, among other things, creating a magnetic effect in an assembly (e.g., a solenoid-operated valve). The amount of, or, the dispersion of the metallic material composition can affect the density of the component. As such, the density of a metal-inclusive component is often related to the application success of the expected magnetic effect and corresponding operational performance of the assembly. Because metal-inclusive components are commonly produced in large batch quantities, variation of the density of each metal-inclusive component can vary from batch-to-batch at the time each metal-inclusive component is produced.

For many applications, prior to incorporation into an assembly, the density of each metal-inclusive component may be determined by the assembly manufacturer. Often, this is done using relatively slow testing procedures that are intended to identify certain (e.g., failing) variations of the expected magnetic effect prior to incorporation of the component into the assembly. Because the density of large-volume batches of metal-inclusive components may need to be tested, and because conventional density testing procedures may be intricate and intensive, testing procedures can be time-consuming and costly for the manufacturer of the assembly. Therefore, a need exists for, among other things, an improved apparatus and method for determining the density of metal-inclusive components.

### SUMMARY

A density evaluator for a metal-inclusive component is disclosed. The evaluator includes a simulator and a meter. The simulator includes a receiving portion for receiving at least a portion of a metal-inclusive component. The meter is operatively connected to the simulator. The meter obtains an inductance value associated with the metal-inclusive component and the inductance value is used to determine a density value. A method and system for evaluating a density of a metal-inclusive component is also disclosed.

### BRIEF DESCRIPTION OF THE DRAWINGS

Embodiments of the disclosure will now be described, by way of example, with reference to the accompanying exemplary drawings, wherein:
Figures 1A-1C illustrate side, partial sectional views of a manually operated density evaluator according to an embodiment of the invention;
Figure 2 illustrates a sample chart for correlating a measured or referenced inductance to an evaluated density of a metal-inclusive component in view of a reference inductance and correlated reference density;
Figure 3 illustrates an exemplary logic flowchart for evaluating a metal-inclusive component;
Figure 4A illustrates a perspective plan view of an at least partially automated density evaluator system according to an embodiment of the invention;
Figure 4B illustrates a perspective plan view of an at least partially automated density evaluator system according to another embodiment of the invention;
Figure 5 illustrates an exploded view of an exemplary solenoid-operated valve; and
Figure 6 illustrates a cross-sectional view of the solenoid-operated valve according to Figure 5.

### DETAILED DESCRIPTION

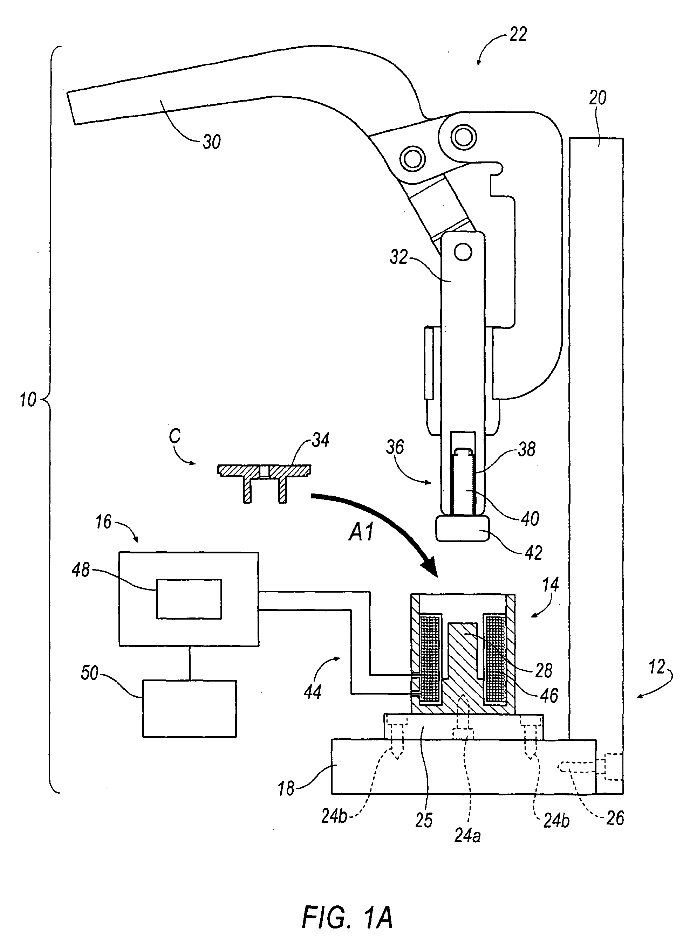

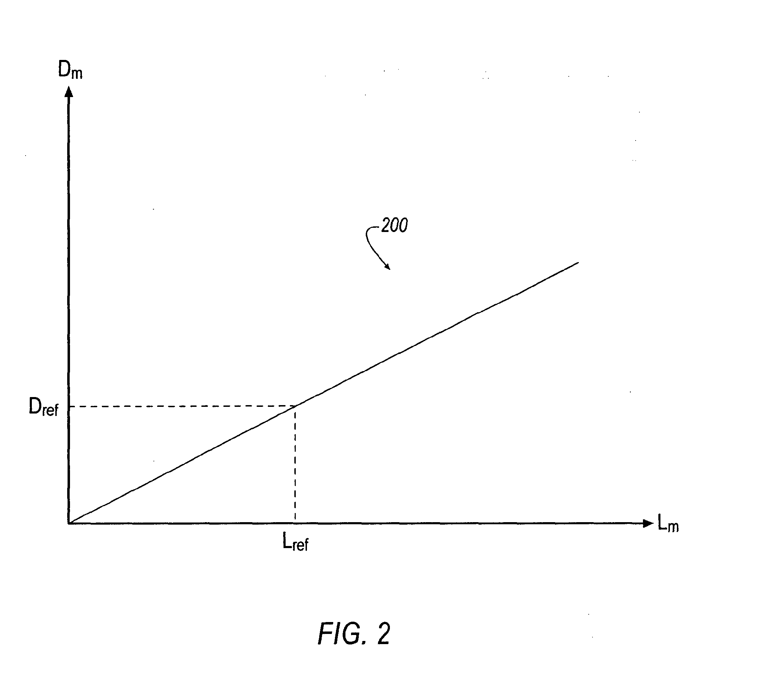

A density evaluator 10 according to an embodiment of the invention is generally illustrated in Figures 1A-1C. The density evaluator can, among other things, determine an evaluated density value **Dₘ** of a metal-inclusive component **C** by measuring an inductance value **Lₘ.** An example of a density-inductance correlation chart is illustrated in Figure 2. As used herein, the term "metal-inclusive component" is meant to include components comprised of a metal, metal composite, alloy, and/or powder metals, the component having magnetic properties that can, for example, create a magnetic effect in an assembly. Such assemblies may include without limitation a solenoid-operated mechanism or similar devices.

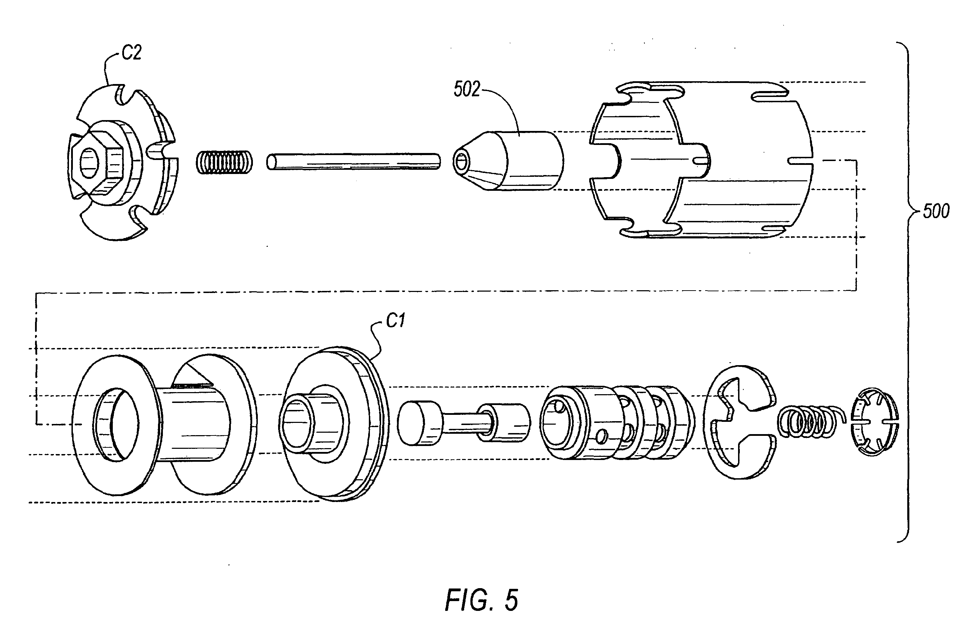

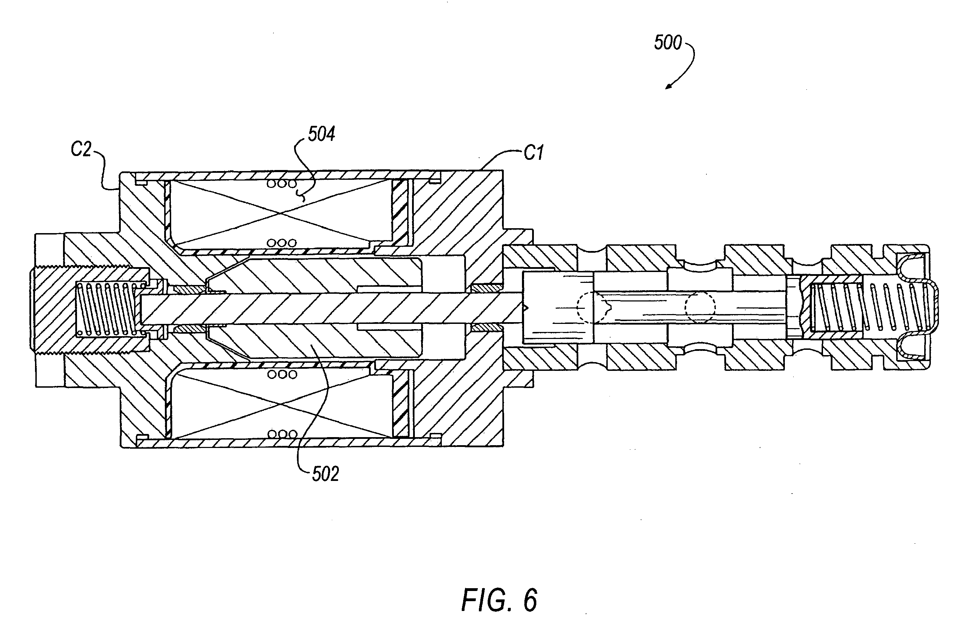

Metal-inclusive components **C** can be employed in a wide variety of applications. For example, according to an embodiment and without limitation, solenoid-operated mechanisms may comprise a solenoid-operated valve. Metal-inclusive components can, for example and without limitation, comprise a flux collector or a pole piece that can be used in connection with a solenoid-operated mechanism. An example of such is generally illustrated in Figures 5 and 6. Further, an exemplary solenoid-operated valve is described in U.S. Patent Number 6,386,220 to Koenings.

With continued reference to Figures 1A-1C, density evaluator 10 generally includes a securing portion 12, a simulator 14, and a meter 16. The simulator 14 may be designed or configured to mimic a structural or operational non-test environment related to the structural or operational use of the metal-inclusive component **C.**

The meter 16 may be any type of meter capable of measuring an inductance value associated with the metal-inclusive component C. If desired, the meter 16 can be a commercially-available inductance meter.

The evaluator 10 may further include a securing portion 12, which can be adapted to retain or secure a portion of the simulator 14 and/or metal-inclusive component C. In an embodiment, the securing portion 12 may include a base portion 18 and a riser portion 20. While the base portion 18 and the riser portion 20 are shown as separate, mechanically-connected components, the invention is not so limited, and the base and riser portions 18,20 may include additional components or they may be integrally formed (such as by a molding or welding). If desired, the base portion 18 and/or the riser portion 20 may be comprised of a suitable plastic or a metal (e.g., aluminum).

The density evaluator 10 may, if desired, also include a clamping assembly 22. The clamping assembly 22 can be connected to the riser portion 20. Among other things, the clamping portion 22 may serve to secure or retain at least a portion of the metal-inclusive component **C** relative to the simulator 14.

In an embodiment, the simulator 14 may be directly connected to the base portion 18. Further, if desired, a portion of the base portion 18 may be adapted to connect to (and if desired, to retain or secure) at least a portion of the simulator 14, or vice versa.

In the illustrated embodiment, an optional spacer 25 is included and at least a portion of the spacer 25 is positioned between the base portion 18 and simulator 14. When employed, the spacer 25 may be adapted to connect to (and further if desired, retain or secure) at least a portion of the simulator 14, or the simulator 14 may be adapted to connect to at least a portion of the spacer 25. The spacer 25 may be comprised of nylon or other suitable materials. In an embodiment, the base portion 18 can be adapted or configured to secure or retain one or more types of substantially interchangeable spacers 25. If desired, spacers 25 may be adapted or configured to retain one or more types of interchangeable simulators 14. The aforementioned potential adaptability may, for example but without limitation, improve ease or change-over in connection with the testing of different sizes or types of components.

In the embodiments depicted in Figures 1A-1C, spacer 25 is generically shown connected or secured to simulator 14 by a first connecting element 24a; the spacer 25 is generically shown connected or secured to base portion 18 by a second connecting element 24b; and the base portion 18 is generically shown connected or secured to riser portion 20 via a third connecting element 26. However, the invention is not limited to the number, form, and types of connecting element or elements illustrated. Moreover, if desired, various associated components may instead be integrally-formed, or otherwise connected (such as, for example, via press-fit or adhesion) and the associated connecting elements that are generically illustrated may be reduced or perhaps entirely eliminated.

Securing portion 12 may include a riser portion 20, which may retain a clamping assembly 22. In the illustrated embodiment, base portion 18 is secured to riser portion 20 by at least one third connecting element 26, which is shown generically (as previously noted). Base portion 18 and riser portion 20 may be manufactured from any desirable materials, such as, for example, aluminum.

As depicted in the illustrated embodiment, the clamping assembly 22 may include a handle portion 30 and a plunger portion 32. Further, the clamping assembly 22 can be configured to perform as, or in substantially the same manner as, a straight-line action toggle clamp. The clamping assembly 22 and components thereof may comprise various commercially-available assemblies and assembly components.

Referring to Figure 1A, prior to placing the metal-inclusive component **C** over or upon a receiving portion 28 of the simulator 14 (the general movement of which is generally represented by depicted arrow **A1**), the clamping assembly 22 may be in a disengaged position (e.g., with plunger portion 32 in the "up" position).

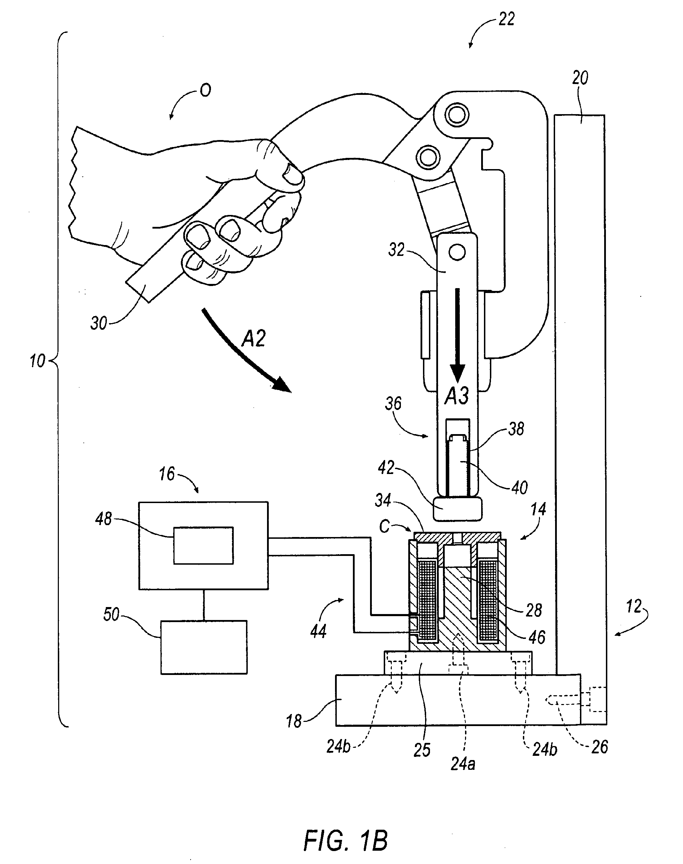

As generally illustrated in the embodiment depicted in Figure 1B, after the metal-inclusive component **C** is positioned in connection with the simulator 14, an operator **O** may, for example, grip and move the handle 30 of the clamping assembly 22 in the direction of arrow **A2** to cause plunger portion 32 of the clamping assembly 22 to move in the direction of arrow **A3** to position plunger 32 in a more engaged or "downward" position.

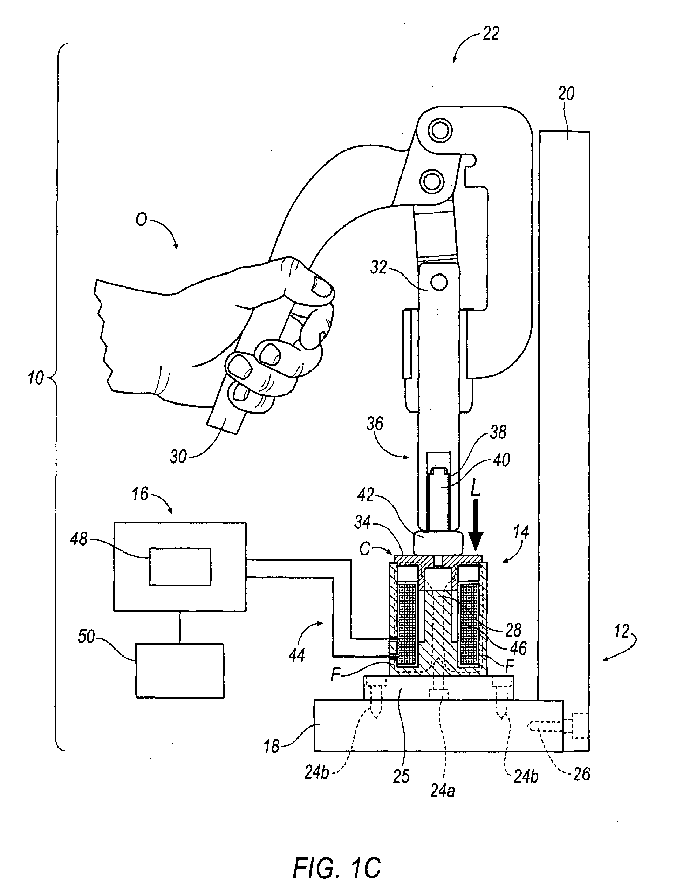

Referring to the embodiment of Figure 1C, after plunger 32 is substantially fully engaged with a portion of the metal-inclusive component **C** (e.g., a top portion 34 of the component **C)** in a "down" position, plunger 32 can apply a load (shown generally in the direction of arrow **L).** Such load may be applied, for example, to a top portion 34 of the metal-inclusive component C to maintain a consistent positioning of the component **C** with respect to the simulator 14 and the associated receiving portion 28. Maintaining a consistent position can provide a more consistent testing and/or evaluation of a component, particularly where a number of components are taken from a large-volume batch.

If desired, the plunger portion 32 may include an adapted end 36, which may be adapted to further include a head portion 42. Although not so limited, in an embodiment, the adapted end 36 may include a bore 38 (e.g., a tapped bore) that receives a threaded plug 40 having a head portion 42 that extends from the adapted end 36. In operation, head portion 42 may, among other things, serve as a buffer between the adapted end 36 of plunger 32 and a portion (e.g., top potion 34) of the metal-inclusive component **C** positioned in the simulator 14. The threaded plug 40 and head portion 42 may comprise any desirable material, including, for example, a thermoplastic resin.

When the metal-inclusive component **C** is connected or secured, such as shown in Figure 1C, an inductance meter 16 may be used to measure an inductance value **Lₘ** to determine if an associated magnetic flux path **F** of the metal-inclusive component **C** is acceptable. In the illustrated embodiment, inductance meter 16 may include two leads 44 that connect to a copper coil 46 associated with the simulator 14 and the receiving portion 28. The receiving portion 28 of the simulator 14 surrounding the copper coil 46 may be comprised of any desirable material, such as, for example, steel.

In an embodiment, the design or configuration of the simulator 14, including the receiving portion 28 and copper coil 46, can substantially simulate or reproduce a flux path **F** of the type that the metal-inclusive component **C** might encounter in its normal or intended operation with respect to an associated or measured inductance **Lₘ.** For example, the simulator 14 may be designed or configured to reproduce or mimic, for example, the receiving portion 502 and coil 504 of a solenoid-operated valve 500. As such, it can be appreciated that the simulator 14 may be designed or configured to imitate how a portion of a solenoid-operated valve 500 would perform in the field. Hence, the shape of the receiving portion 28 and number of turns and wrapping of the coil 46 may vary in view of the metal-inclusive component **C** to be evaluated for a particular solenoid-operated valve assembly, or other application.

It will be recognized that any number of simulators 14 may be designed or configured with respect to size, shape, material composition, or the like, and may further be interchangeably-connected to the base portion 18 and/or a spacer 25 (if employed) to accommodate the evaluation of various particular metal-inclusive components for an assembly or application.

Additionally, with reference to the illustrated embodiment, a vertical spacing between the metal-inclusive component **C** and the head portion 42 of the threaded plug 40 may be adjusted, for example, by extending or retracting the threaded plug 40 within the tapped bore 38. Among other things, such an adjustment may assist with the accommodation of metal-inclusive components having varying heights, widths, or thicknesses. It will further be appreciated that the density evaluator 10 may be a modular device and it is not limited to evaluating a specific metal-inclusive component.

Referring to Figure 2, a sample chart is shown for correlating a measured inductance value (**Lₘ** axis) to an evaluated density (**Dₘ** axis) for a given metal-inclusive component or portion thereof. A measured inductance value **Lₘ** may, for example, be provided by an inductance meter. The measured inductance value **Lₘ** can be directly compared to a reference inductance value **L_{ref},** which in turn may be correlated to an acceptable high- or low-density reference value **D_{ref}** for a reference (or "standard") metal-inclusive component known to have an acceptable density. Consequently, if the measured inductance value **Lₘ** meets or exceeds an associated "acceptable" reference inductance value **L_{ref},** the component, based upon the correlation, the component being tested should have an acceptable density and corresponding magnetic effect.

By way of example, without limitation, the reference inductance value **L_{ref}** for a reference metal-inclusive component may range, for example, from between about 38mH to about 41 mH, which, in turn, may correlate to a density reference value **D_{ref}** that may range, for example from about 5 grams/cubic-cm to about 7grams/cubic-cm.

The relationship between inductance and density value of a metal-inclusive component **C** as described above may be determined mathematically or graphically. In an embodiment, the relationship between inductance and density for a metal-inclusive component may be determined by a function, such as that generally plotted and shown at 200. Consequently, in an embodiment of the invention, if the measured inductance value **Lₘ,** is greater than or equal to the reference inductance value **L_{ref},** the evaluated density **Dₘ** that correlates to the measured inductance value **Lₘ** of the metal-inclusive component **C** is determined to be acceptable because the evaluated density **Dₘ** is greater than or equal to the density reference value **D_{ref}.** However, if the measured inductance value **Lₘ** is less than the reference inductance value **L_{ref}** the evaluated density **Dₘ** that correlates to the measured inductance value **Lₘ** of the metal-inclusive component **C** is determined to be not acceptable because the evaluated density **Dₘ** is less than the density reference value **D_{ref}.**

However, it will be appreciated by those of skill in the art that function 200 is not limited to a linear function and that the function 200 may be determined using various other desirable methodologies and appropriate equations. It will also be appreciated that the plot of the function 200 may vary according to the shape, size, and density of the metal-inclusive component **C** that is to be evaluated. For example, the plot of the function 200 may have a different curve if the evaluated metal-inclusive component **C** is a flux collector **C1** or a pole piece **C2.**

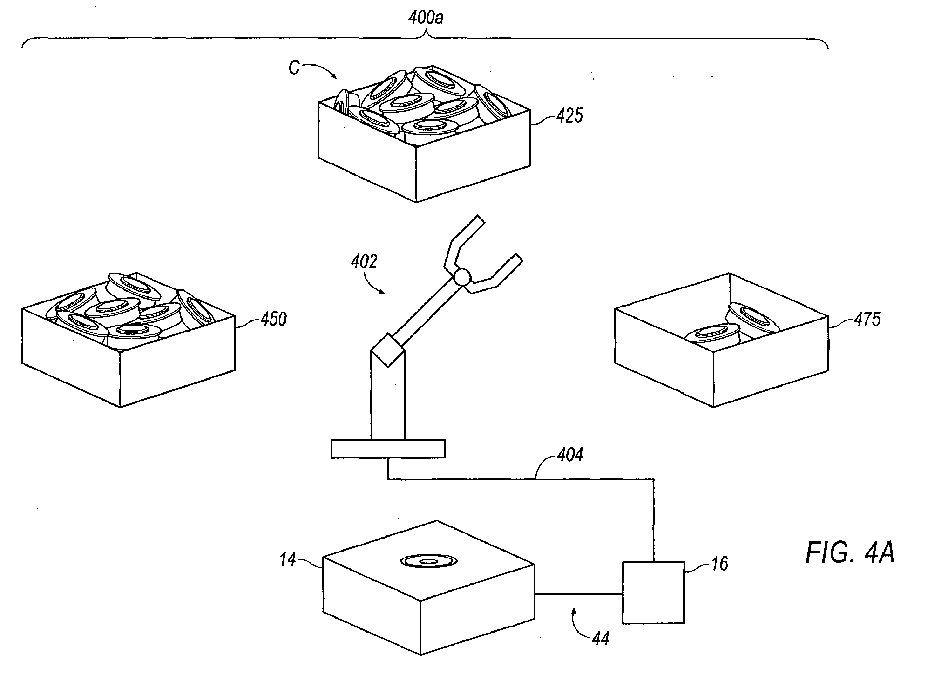

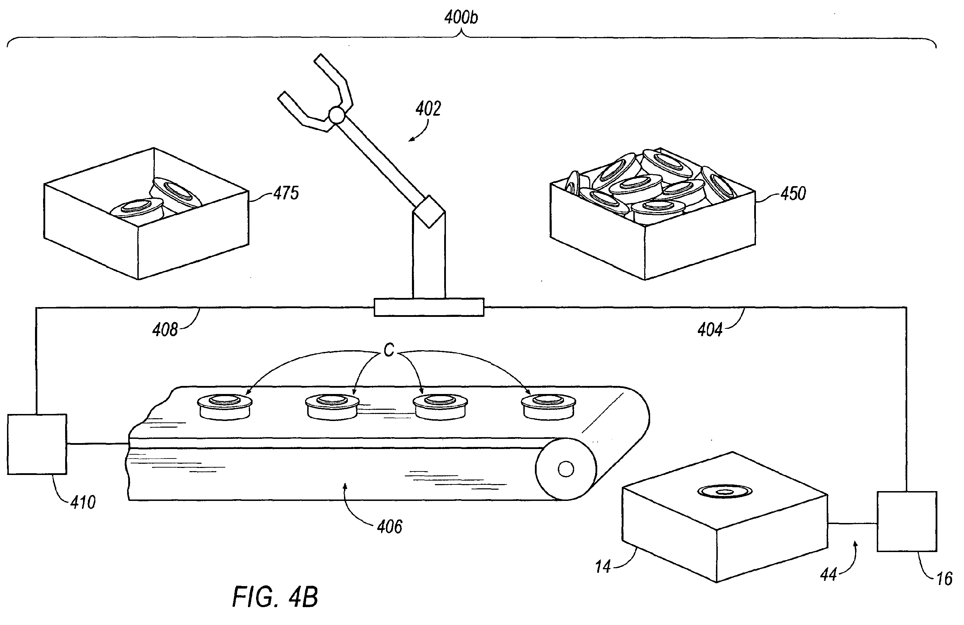

Referring to Figures 1A-1C, it will be appreciated that the logic for comparing the measured inductance value **Lₘ** with the reference inductance value **L_{ref}** to determine the acceptability/non-acceptability of an evaluated density value **Dₘ** can be conducted using a microprocessor 48. If desired, the microprocessor 48 may be located in the inductance meter 16. Alternatively, the logic that is employed may be located remotely from the inductance meter 16 and carried out, for example, by a workstation 50, with a computer/microprocessor, that is connected to, or in communication with, the inductance meter 16 and that receives measured inductance values **Lₘ** and determines evaluated density values **Dₘ.** Moreover, if the logic is located remotely from the inductance meter 16, the logic may be located in an automated carrier 402, such as generally described in connection with Figures 4A and 4B below.

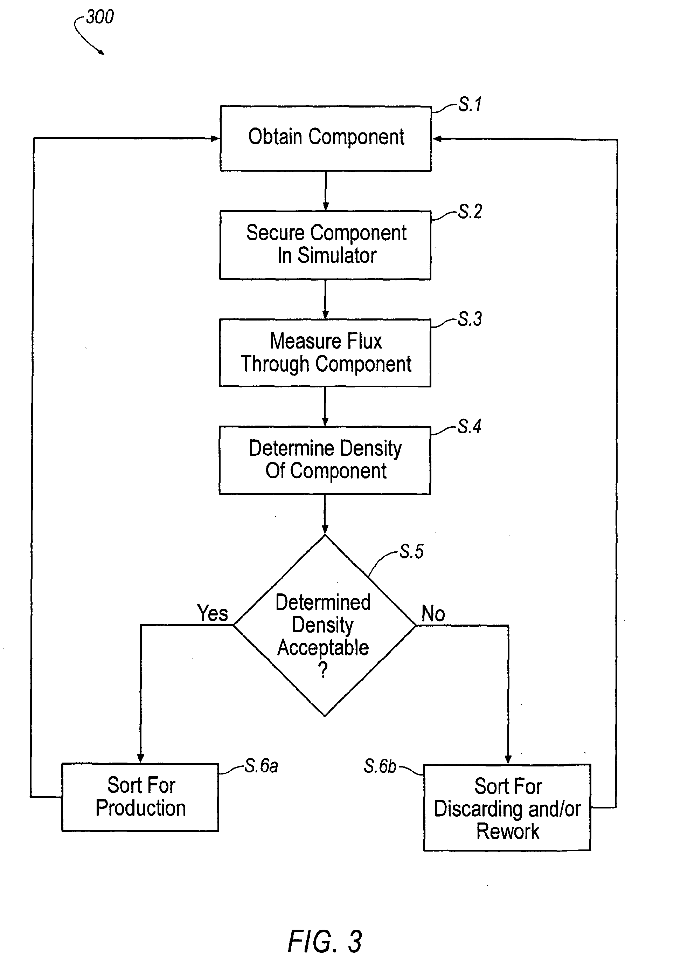

Referring to Figure 3, the method for determining the density of the metal-inclusive component C is shown generally at 300 including step **S.1** through step **S.6a** or **S.6b.** Step **S.1** comprises obtaining a component **C**. Step **S.2** involves appropriately securing the component **C** in (or in connection with) a simulator 14. Steps **S.3** and **S.4** involve measuring an inductance **Lₘ** associated with the component **C** and using that measurement to determine an associated density of the component **C**.

At Step **S.5,** an assessment/evaluation is made. If the evaluated density **Dₘ** of the component **C** is determined to be acceptable, for example, according to an associated chart (see e.g., the illustrated chart in Figure 2), the component **C** may "pass" and then move on to Step **S.6a.** Such a component C may then be acceptable and subsequently sorted for production into an assembly, such as, for example, a solenoid-operated valve 500. Conversely, if the evaluated density **Dₘ** of the component C is determined not to be acceptable, the component **C** may then move on to Step **S.6b,** where it may be sorted for discarding and/or reworking. Such discarding and/or reworking may involve disposal, recycling, or returning the component (for example to a supplier). Once step(s) **S.6a, S.6b** is/are completed, the method may return to step **S.1,** as desired, for evaluation of another metal-inclusive component **C** or, until all components **C** in a given grouping or batch are evaluated.

Prior embodiments describe and illustrate generally manual-based density evaluation devices. While such devices are relatively precise, and less time consuming and less costly than many conventional methodologies, it will be appreciated that the present invention is not limited to manually-operated density evaluator systems. Rather, the inventive concept anticipates automating aspects of the associated devices and system. By way of example, and without limitation, Figure 4A depicts an automated density evaluator system shown generally as 400a. As illustrated, a simulator 14 is generally shown in communication with an inductance meter 16, also generally illustrated. An automated carrier 402 is shown generally. However, the system is not limited to the illustrated embodiment, and the automated carrier 402 may, for example, comprise a robotic arm, a magnetic retriever, or other known components that may retrieve components C from a set (e.g., a large-volume batch bin 425) to be subsequently placed in, or otherwise operatively connected to, simulator 14 for evaluation. Further, if desired, the automated carrier 402 may be configured and operatively controlled to apply a load or force to the top portion 34 of the metal-inclusive component C (for example, the carrier may, in whole or in part apply a load or force in a similar fashion as that of the plunger 32 shown in Figure 1C).

In a direct-connection embodiment, such as shown in Figure 4A, in addition to leads 44 extending from inductance meter 16 to the simulator 14 (to determine the inductance **Lₘ** of metal-inclusive component **C**), a feedback lead 404 may be provided from inductance meter 16 to the automated carrier 402 for providing a signal (such as a "sorting" signal) to the automated carrier 402. Upon determining if the component C is acceptable for production in an assembly, components may be sorted into bins (see e.g., bins 450, 475) for production or discarding/reworking, respectively, in view of the signal provided from the inductance meter 16 to the automated carrier 402 via the feedback lead 404. It is to be understood that the aforementioned leads and signals may instead, if desired, be transmitted wirelessly.

In an embodiment, a signal sent over the feedback lead 404 may be, for example, in the form of a "1" for an acceptable component or a "0" for a non-acceptable component. For example, a signal of "1" (indicating an acceptable component) may be sent by microprocessor 48 (or a comparator located in the inductance meter 16) that has determined that the measured inductance **Lₘ** meets or exceeds an associated referenced inductance value **L_{ref}.** Conversely, a signal of "0" (indicating a non-acceptable component) may be sent from the microprocessor 48 (or comparator in the inductance meter 16) that has determined that the measured inductance **Lₘ** fails to meet or exceed an associated referenced inductance value **L_{ref}.**

It will further be appreciated that the automated carrier 402 may itself include (or be connected to) the logic device, microprocessor, comparator, or other logic means that determines if the measured inductance **Lₘ** corresponds to an acceptable evaluated density **Dₘ.**

Another embodiment of an automated density evaluator system is shown generally in Figure 4B as 400b. As illustrated, the simulator 14 is shown generally connected to or in communication with inductance meter 16. An automated carrier 402 and a conveying system 406 (shown as a conveyor belt system transporting a plurality of components **C**) are both shown generally, but are not limited to the illustrated mechanisms and systems.

If desired, the conveying system 406 may be configured to place or deposit components **C** directly into operative connection with simulator 14. Alternatively, automated carrier 402 may retrieve components **C** from the conveying system 406 for deposit/placement in connection with simulator 14.

As described above, automated carrier 402 may be configured to apply a load or force to a top portion of the component **C** and communicate with the inductance meter 16 to appropriately sort components **C**, for example, into various bins. Additionally, a communication line (whether hardwired or wireless), shown generally as 408, may be provided to permit communication of the automated carrier 402 with a control mechanism 410 associated with the conveying system 406.

For example, in the illustrated system 400b, an indexing conveyor belt may deposit components C into a simulator 14 (or, instead, present them to an automated carrier 402), when the carrier 402 provides a signal indicating that the carrier has removed an "evaluated" component from the simulator 14.

The present invention has been particularly shown and described with reference to the foregoing embodiments, which are merely illustrative of the best mode or modes for carrying out the invention. It should be understood by those skilled in the art that various alternatives to the embodiments of the invention described herein may be employed in practicing the invention without departing from the spirit and scope of the invention as defined in the following claims. It is intended that the following claims define the scope of the invention and that the method and apparatus within the scope of these claims and their equivalents be covered thereby. This description of the invention should be understood to include all novel and non-obvious combinations of elements described herein, and claims may be presented in this or a later application to any novel and non-obvious combination of these elements. Moreover, the foregoing embodiments are illustrative, and no single feature or element is essential to all possible combinations that may be claimed in this or a later application.

## Claims

1. A density evaluator (10), comprising:
a simulator (14) including a receiving portion (28) for receiving at least a portion of a metal-inclusive component (C); and
a meter (16) in operative connection with the simulator (14),
wherein the meter (14) obtains an inductance value associated with the metal-inclusive component (C) and the inductance value (Lₘ) is used to determine a density value (Dₘ).

2. The density evaluator (10) according to claim 1, wherein the simulator (14) includes a coil (46).

3. The density evaluator (10) according to claim 1, including a securing portion (12).

4. The density evaluator (10) according to claim 3, wherein the securing portion (12) includes a base portion (18) and a riser portion (20).

5. The density evaluator (10) according to claim 4, including a clamping assembly (22) adapted to secure the metal-inclusive component (C) within at least a portion of the simulator (14).

6. The density evaluator (10) according to claim 5, wherein the clamping assembly (22) includes a handle portion (30) and a plunger portion (32) that is adapted to engage a portion of the simulator (14).

7. The density evaluator (10) according to claim 4, including a spacer (25), wherein at least a portion of the spacer (25) is located between the base (18) and the simulator (14).

8. The density evaluator (10) according to claim 6, wherein the plunger portion (32) includes an adapted end (36) that is adapted to receive a head portion (42).

9. The density evaluator (10) according to claim 8, including a head portion (42) connected to the adapted end (36), wherein the head portion (42) is adapted to be interposed between the adapted end (36) and a portion of the metal-inclusive component (C).

10. The density evaluator (10) according to claim 1, wherein the meter (16) is an inductance meter.

11. The density evaluator (10) according to claim 10, includes leads (44) operatively connecting the meter (16) to a coil (46).

12. The density evaluator (10) according to claim 1, wherein the simulator (14) mimics structural or operational characteristics of a solenoid-operated mechanism (500).

13. The density evaluator (10) according to claim 12, wherein the simulator (14) mimics structural or operational characteristics of a receiving portion (502) and coil (504) of a solenoid-operated mechanism (500).

14. The density evaluator (10) according to claim 1, wherein the metal-inclusive component (C) is a flux collector (C1) or a pole piece (C2) of a solenoid-operated mechanism.

15. The density evaluator (10) according to claim 1, including a microprocessor (48) for determining a density value (Dₘ) based upon a measured inductance value (Lₘ) from the metal-inclusive component (C).

16. A density evaluator system (400a), comprising:
a carrier (402) for obtaining and moving a metal-inclusive component (C);
a simulator (14) including a receiving portion for receiving at least a portion of the metal-inclusive component (C) from the carrier; and
a meter (16) in operative connection with the simulator,
wherein the meter obtains an inductance value associated with the metal-inclusive component (C) and the inductance value (Lₘ) is used to determine a density value (Dₘ).

17. The system according to claim 16, wherein the carrier (402) is at least partially automated.

18. The system according to claim 17, wherein the simulator (14) mimics structural or operational characteristics of a receiving portion and coil for a solenoid-operated mechanism.

19. The system according to claim 18, including a microprocessor (48) for determining a density value (Dₘ) based upon a measured inductance value (Lₘ).

20. The system according to claim 16, including a conveying system (406) for conveying or transporting a plurality of metal-inclusive components (C).

21. The system according to claim 16, wherein the carrier (402) includes a means for transferring the metal-inclusive component (C) to the simulator.

22. The system according to claim 16, wherein the metal-inclusive component (C) is a flux collector (C1) or a pole piece (C2) of a solenoid-operated mechanism.

23. A method for evaluating density of a metal-inclusive component (C), comprising:
receiving at least a portion of a metal-inclusive component (C) in a receiving portion (28) of a simulator (14);
measuring an inductance value (Lₘ) associated with the metal-inclusive component (C); and
using the inductance value (Lₘ) to determine a density associated with the metal-inclusive component (C).

24. The method according to claim 23, including determining if the density that is determined is acceptable or not acceptable.

25. The method according to claim 24, including sorting or assigning the metal-inclusive component (C) based on the determination.

26. The method according to claim 23, wherein the inductance is measured by an inductance meter (16) and the density is determined using a microprocessor (48).

27. The method according to claim 23, including comparing the measured inductance value (Lₘ) to a reference inductance value (L_{ref}).
